# EUROPÄISCHE PATENTSCHRIFT

(11) **EP 3 779 619 B1**
(45) Veröffentlichungstag und Bekanntmachung des Hinweises auf die Patenterteilung: **29.06.2022**
(21) Anmeldenummer: 19191269.0
(22) Anmeldetag: 12.08.2019
(51) Int. Cl.: G05B 19/042, G05B 19/418, G05B 23/02, G06Q 10/06

(54) **VERFAHREN UND VORRICHTUNG ZUR BESTIMMUNG EMERGENTER RISIKEN EINES TECHNISCHEN SYSTEMS**
METHOD AND DEVICE FOR DETERMINING EMERGING RISKS OF A TECHNICAL SYSTEM
PROCÉDÉ ET DISPOSITIF POUR LA DÉTERMINATION DE RISQUES ÉMERGENTS D'UN SYSTÈME TECHNIQUE

(43) Veröffentlichungstag der Anmeldung: 17.02.2021
(73) Patentinhaber: Siemens Aktiengesellschaft, 80333 München (DE); Robert Bosch GmbH, 70442 Stuttgart (DE)
(72) Erfinder: Hung, Koo Chee, 70439 Stuttgart (DE); Höfig, Kai, 80797 München (DE); Rothbauer, Stefan, 86156 Augsburg (DE); Schröck, Sebastian, 71263 Weil der Stadt (DE); Vorderer, Marian, 71277 Rutesheim (DE); Zeller, Marc, 81243 München (DE)
(74) Vertreter: Maier, Daniel Oliver

(56) Entgegenhaltungen:
- US-A1- 2015 186 814
- US-A1- 2016 196 513
- US-B1- 6 223 143

## Beschreibung

Die vorliegende Erfindung betrifft ein Verfahren zur Analyse von emergentem Verhalten eines technischen Systems, insbesondere ein Verfahren zur automatisierten Analyse emergenter Risiken eines technischen Systems. Weiterhin werden eine entsprechende Vorrichtung, ein Computerprogramm und ein elektronisch lesbarer Datenträger bereitgestellt.

### Technischer Hintergrund

Produktionsanlagen müssen bestimmten Richtlinien für Betriebssicherheit genügen, beispielsweise Environment, Health and Safety (EHS) Richtlinien gemäß ISO 12100. Dabei müssen unter anderem Risiken identifiziert werden, die sich beim Betrieb einer Produktionsanlage für die Arbeiter, die mit diesen Maschinen interagieren, ergeben. Ein Beispiel für ein solches Risiko ist eine Quetschstelle wie sie etwa beim Betrieb einer Presse auftreten kann. Als Maßnahmen für die Verringerung eines solchen Risikos können beispielsweise elektronische Maßnahmen, wie ein Sicherheitsschalter oder arbeitstechnische Vorgaben herangezogen werden, wie etwa Betrieb der Maschine ausschließlich, wenn alle Arbeiter den Raum verlassen haben.

Eine populäre Analysetechnik, um Risiken und Maßnahmen zu allokieren und zu dokumentieren ist die FMEA Analyse. Diese Art der der Analyse ist ein manueller und fehlerbehafteter Vorgang. Bisherige Techniken zur Automatisierung ziehen einzelne Risiken in Betracht.

Eine Übersicht von Verfahren zur automatisierten Berechnung oder rechnergestützten Organisation von FMEA Tabellen ist beispielsweise aus dem Dokument Höfig, Kai, Marc Zeller, and Lars Grunske. "MetaFMEA-A framework for reusable FMEAs." International Symposium on Model-Based Safety and Assessment. Springer, Cham, 2014, bekannt. In diesen Techniken geht es allerdings vermehrt um die Automatisierung der Analyse im Allgemeinen und nicht um die Berechnung von möglicherweise emergentem Verhalten, wobei auf Aspekte der funktionalen Sicherheit behandelt werden und nicht die Betriebssicherheit für eine Person eines technischen Systems.

Aus dem Dokument Awad, Ramez, Manuel Fechter, and Jessica van Heerden. "Integrated risk assessment and safety consideration during design of HRC workplaces." 2017 22nd IEEE International Conference on Emerging Technologies and Factory Automation (ETFA). IEEE, 2017, ist beispielsweise eine Technik zur Automatisierung der benötigten Analyse der Betriebssicherheit mittels FMEA für Industrieanlagen bekannt. In diesem Dokument wird von einer existierenden Menge von Gefährdungen ausgegangen, die dann über eine Funktion mit ihren Ursachen verbunden sind, wobei weiter nach manueller Eingabe von Auftretenswahrscheinlichkeit, Schwere und Kontrollierbarkeit eine Risikoprioritätszahl berechnet wird. Zusätzlich kann manuell eine Sicherheitsmaßname ausgewählt werden und die angepasste Risikoprioritätszahl wird erneut berechnet.

Aus der Druckschrift US 2015 / 0 186 814 A1 ist ein System bekannt, das auf der Grundlage der Anwendbarkeit von jeweiligen charakteristischen Elementen auf ein bestimmtes Produkt und einen bestimmten Herstellungslieferanten Zuordnungen von quantitativen Risikoeinstufungen zu den jeweiligen charakteristischen Elementen und den jeweiligen technischen Profilelementen empfängt und eine technische Risikobewertung des jeweiligen Fertigungslieferanten für das jeweilige Produkt erzeugt.

Aus der Druckschrift US 6 223 143 B1 ist ein quantitatives Risikobewertungssystem bekannt, das ein Risikomodell eines Systems aufbaut, für das das Risiko eines Ausfalls bewertet wird, dann das Risiko des Systems analysiert.

Aus der Druckschrift US 2016 / 0196 513 A1 sind computerimplementierte Frameworks und Verfahren zur Ermöglichung von Risikoanalysen im Zusammenhang mit dem Klimawandel bekannt, basierend auf einer großen Anzahl voneinander abhängiger physischer Anlagen.

Jedoch befassen sich die bekannten Techniken nicht mit einer Berechnung neuer Gefährdungen bei der Betriebssicherheit, die sich erst aus dem Zusammenspiel ansonsten unkritischer Maschinen ergeben, sogenannte emergente Risiken.

### Zusammenfassung

Daher besteht Bedarf an verbesserten Techniken zum Analysieren von emergentem Verhalten eines technischen Systems, die zumindest einige der genannten Einschränkungen und Nachteile überwinden oder abmildern.

Diese Aufgabe wird mit den Merkmalen der unabhängigen Ansprüche gelöst. In den abhängigen Ansprüchen sind weitere vorteilhafte Ausführungsbeispiele der Erfindung beschrieben. Im Folgenden wird die erfindungsgemäße Lösung in Bezug auf die beanspruchten Verfahren, als auch in Bezug auf ein beanspruchtes Analysesystem beschrieben. Merkmale, Vorteile oder alternative Ausführungsbeispiele können den jeweils anderen beanspruchten Kategorien zugeordnet werden, und umgekehrt. In anderen Worten, die Ansprüche für das Analysesystem können durch Merkmale verbessert werden, die im Rahmen der Analyseverfahren beschrieben oder beansprucht werden. In diesem Fall können die funktionellen Merkmale des Verfahrens durch operative Einheiten des Analysesystems ausgeführt werden.

Ein computerimplementiertes Verfahren zur Analyse der Betriebssicherheit eines technischen Systems umfasst die in Anspruch 1 definierten Schritte.

In einem Schritt wird eine Konfiguration eines technischen Systems empfangen. Das technische System besteht aus mehreren Teilsystemen, oder technischen Teilsystemen, welche für sich wiederum technische Systeme darstellen könne, welche wiederum weitere technische Untersysteme umfassen können. Die Konfiguration kann den Aufbau des technischen Systems aus den technischen Teilsystemen definieren insbesondere zum Beispiel Anzahl, Typen, Anordnungen, und/oder Zusammenwirken der technischen Teilsysteme in dem technischen System. Ein technisches System kann beispielsweise eine Maschinenanlage und die Teilsysteme Maschinen der Maschinenanlage sein, ohne darauf begrenzt zu sein.

In einem weiteren Schritt werden Betriebsrisiken der Teilsysteme empfangen, oder bestimmt. Ein Teilsystem kann ein oder mehrere Risiken, oder Betriebsrisiken, aufweisen. Somit kann eine Vielzahl von Betriebsrisiken empfangen werden, welche jeweils einem Teilsystem, oder auch dem technischen System im Gesamten, zugeordnet sein können. Zum Beispiel können einem ersten Teilsystem ein oder mehrere Betriebsrisiken zugeordnet sein, und einem zweiten Teilsystem können ein oder mehrere Betriebsrisiken zugeordnet sein. Das technische System kann mindestens zwei Teilsysteme aufweisen, wobei jedem der mindestens zwei Teilsysteme zumindest ein Betriebsrisiko zugeordnet werden kann.

Dabei ist zu verstehen, dass das technische System eine beliebige Anzahl von Teilsystemen aufweisen kann, wobei jedem von mindestens zwei Teilsystemen, oder jedem von einer beliebigen Anzahl von Teilsystemen, ein Betriebsrisiko oder mehrere Betriebsrisiken zugeordnet sein können. In anderen Worten, für jedes Teilsystem von einer Vielzahl von Teilsystemen kann ein Betriebsrisiko, bzw. können mehrere Betriebsrisiken bestimmt werden. Ein Betriebsrisiko kann eine Funktion, oder Fehlfunktion, oder in anderen Worten eine Fehlermöglichkeit, des jeweiligen Teilsystems darstellen, welche bei Auftreten in einigen Situationen eine Gesundheitsgefährdung für eine Person zur Folge haben kann, aber in einigen Situationen auch keine direkte Gefährdungen für eine Person zur Folge haben kann.

Bei dem Bestimmen von Betriebsrisiken für die Teilsysteme kann ein Zusammenwirken der Teilsysteme nicht berücksichtigt sein, d.h. es können Betriebsrisiken, für die für die einzelnen technischen Teilsysteme isoliert voneinander bestimmt werden.

In einem weiteren Schritt werden emergente Risiken für das technische System bestimmt. Ein emergentes Risiko kann durch Kombination von mindestens zwei Betriebsrisiken, insbesondere unterschiedlicher Teilsysteme, bestimmt werden.

Es kann mindestens ein emergentes Risiko, oder eine Vielzahl von emergenten Risiken, für das technische System bestimmt werden, insbesondere kann für eine Gruppe umfassend mindestens zwei Teilsysteme, oder für alle Teilsysteme, eine vollständige Kombination von allen zugeordneten Betriebsrisiken durchgeführt werden. In anderen Worten, eine vollständige Kombination kann alle möglichen Kombinationen von einzelnen Betriebsrisiken umfassen, wobei jedes Betriebsrisiko mit jedem anderen Betriebsrisiko kombiniert werden kann. Eine Kombination kann somit eine beliebige Kombination von zwei, oder 3, oder einer beliebigen Anzahl von einzelnen Betriebsrisiken darstellen. Es könnten insbesondere vollständige Kombinationen von zwei, und/oder von drei Betriebsrisiken gebildet werden.

Somit können Fehlfunktionen von technischen Systemen, im Zusammenwirken eine Gefährdung, für die Gesundheit einer Person bewirken. Die Gefährdung kann durch Zusammenwirken von mindestens zwei Betriebsrisiken von mindestens zwei unterschiedlichen Teilsystemen entstehen. Dabei kann die Gefährdung durch ein alleiniges Auftreten einer Fehlfunktion eines einzelnen Teilsystems nicht entstehen.

Ein emergentes Risiko kann somit ein neues, bisher nicht bekanntes Risiko darstellen, welches basierend auf einem Zusammenwirken (in anderen Worten bei einer Interaktion oder Wechselwirkung) von mindestens zwei Teilsystemen, bzw. von mindestens zwei Betriebsrisiken der Teilsysteme bei gleichzeitigem Eintreten eine Gefährdung einer Person darstellen. Wenn mindestens zwei Betriebsrisiken eintreten bzw. die Fehlverhalten von zwei Teilsystemen während einem Zeitraum gleichzeitig vorliegen kann dadurch eine Gefahrenquelle für eine Person entstehen. Die Gefährdung einer Person kann auf einem gleichzeitigen Eintreten von mindestens zwei von den im ersten Schritt des Verfahrens bestimmten Betriebsrisiken basieren.

Der Erfindung liegt die Erkenntnis zugrunde dass bei einer Interaktion, daher einer technischen Wirkung zumindest eines technischen Teilsystems auf ein weiteres Teilsystem, die einzelnen Betriebsrisiken derart zusammenwirken können, und gleichzeitig auf eine Person in der Nähe der technischen Anlage einwirken können, so dass eine Gefährdung für die Gesundheit einer Person vorliegt, die nicht oder geringer ausgebildet ist, wenn eines der zusammenwirkenden Betriebsrisiken nicht vorliegt.

Das erfindungsgemäße Verfahren ermöglicht somit eine computergestützte Berechnung neuer Gefährdungen, die sich erst aus dem Zusammenspiel ansonsten unkritischer Maschinen ergeben, sogenannte emergente Risiken. Insbesondere wird durch das erfindungsgemäße Verfahren ein automatisiert berechnetes Vollständigkeitskriterium zur Analyse von emergentem Verhalten in Produktionsanlagen bereitgestellt.

Das Verfahren kann weiter ein Bestimmen mindestens einer Maßnahme umfassen, welche mindestens eines der emergenten Risiken verringert. In einigen Beispielen kann für ein emergentes Risiko mindestens eine zugehörige Maßnahme bestimmt werden, welche das emergente Risiko verringert. Die mindestens eine Maßnahme kann eine Vielzahl von Maßnahmen umfassen. Entsprechend kann für eine Vielzahl von emergenten Risiken jeweils eine oder mehrere Maßnahmen bestimmt werden, wobei eine Maßnahme mindestens einem emergenten Risiko zugeordnet ist, und welche ein zugeordnetes emergentes Risiko verringert, oder in anderen Worten, welche eine Auftretenswahrscheinlichkeit des emergenten Risikos verringert.

Dabei kann das Bestimmen der mindestens einen Maßnahme die folgenden Schritte umfassen. Trainierte Funktionen können auf die emergenten Risiken angewendet werden, wobei die trainierten Funktionen mit Trainingsdaten trainiert wurden, welche bekannte Risiken und zugehörige bekannte Maßnahmen, welche die bekannten Risiken verringern, umfassen. Durch das Anwenden der trainierten Funktionen auf die bestimmten emergenten Risiken wird, die mindestens eine Maßnahme bestimmt. Das Anwenden von trainierten Funktionen auf die emergenten Risiken kann in einem, bzw. durch ein neuronales Netzwerk durchgeführt werden. Die trainierten Funktionen können Ende-zu-Ende trainierte Funktionen sein, wobei eine Eingabe in die trainierten Funktionen eine oder mehrere emergente Risiken sein können, und eine Ausgabe der Funktionen eine oder mehrere Maßnahmen, welche die eine oder mehreren emergenten Risiken verringern. Die trainierten Funktionen können Maschinen Learning Funktionen sein.

In anderen Worten, die trainierten Funktionen wurden mit Trainingsdatensätzen trainiert, welche in einer Datenbank enthalten sein können. Derartige Trainingsdatensätze können beispielsweise in einer Datenbank enthalten sein, in welche fortlaufend aufgetretene neue Risiken, oder erkannte neue Risiken von einer Vielzahl von technischen Systemen gespeichert werden.

Entsprechend kann das computerimplementierte Verfahren zur Analyse der Betriebssicherheit eines technischen Systems weitergebildet werden zu einem computerimplementierten Verfahren zum Bestimmen von Maßnahmen für emergente Risiken eines technischen Systems, in anderen Worten einem Recommender-System.

Derartige Maßnahmen können beispielsweise umfassen: Abstände zwischen Teilsystemen vergrößern, um Risiko zu reduzieren; Zusätzliche, räumliche Trennungen zwischen Teilsystemen einfügen; Wartezeiten zwischen einzelnen Verfahrensschritten der Teilsysteme einführen, in welchen die Betriebsrisiken auftreten können; Überwachung/Sensorik zur rechtzeitigen Erkennung von Reaktionen, und weitere ähnliche Maßnahmen.
Die Maßnahmen können bestimmt, oder in anderen Worten ausgewählt, werden mittels eines Machine Learning Algorithmus.

Weiter kann ein emergentes Risiko, das durch Kombination zweier bekannter Risiken von einzelnen Teilsystemen auftritt, automatisiert aus einer Datenbank berechnet werden.

Somit wird eine vollständige Analyse der Betriebssicherheit eines technischen Systems ermöglicht, wobei manuell aufwändige und somit fehleranfällige Prozesse vermieden werden können. Besonders vorteilhaft ergibt sich somit eine vollständige Kombination von Betriebsrisiken, welche bei manuellen Prozessen nicht gewährleistet ist. Neben der damit verbundene Kostenersparnis ergibt sich weiterhin die Möglichkeit bei einer Änderung der Konfiguration einer Maschine, beispielsweise durch Hinzufügen eines weiteren Roboterarms, eine optimale Maßnahmenallokation vorzunehmen die mit dem geringsten Ressourceneinsatz das bestmögliche Maß an Betriebssicherheit einer Produktionsanlage bietet.

Ein Betriebsrisiko kann ein bekanntes Risiko darstellen, welches beispielsweise computerimplementiert aus einer Datenbank bestimmt werden kann. Das Bestimmen von Betriebsrisiken der Teilsysteme kann ein Abfragen von Betriebsrisiken für technische Teilsysteme aus einer Datenbank umfassen. Die Datenbank kann für ein Teilsystem, oder für jedes von mehreren Teilsystemen, Betriebsrisiken enthalten, welche für das jeweilige Teilsystem isoliert von einer möglichen Betriebsumgebung festgestellt wurden. Insbesondere kann ein Betriebsrisiko in der Datenbank durch einen Hersteller einer maschinellen Anlage, oder durch auftreten in einer anderen Produktionslinie, hinzugefügt worden sein. Dadurch kann eine externe Datenbank, welche Betriebsrisiken der einzelnen Teilsysteme enthält, durch eine Vielzahl von verantwortlichen Instanzen befüllt und gepflegt werden, wobei die Datenbank vorteilhaft für eine computergestützte vollständige Risikoanalyse der Betriebssicherheit einer technischen Anlage, zum Beispiel einer Produktionslinie, er genutzt werden kann.

Das Bestimmen einer Vielzahl emergenter Risiken kann ein automatisches, oder computergestütztes, Bestimmen aller möglichen Kombinationen der einzelnen Betriebsrisiken der Teilsysteme umfassen. Durch das automatische bestimmen aller möglichen Kombinationen wird die Vollständigkeit der Analyse gewährleistet.

Das Verfahren zur Analyse der Betriebssicherheit eines technischen Systems kann weiter folgende Schritte umfassen.

In einem Schritt können Auftretenswahrscheinlichkeiten für die Betriebsrisiken bestimmt werden. In anderen Worten für ein Betriebsrisiko eines Teilsystems kann eine Auftretenswahrscheinlichkeit bestimmt werden. Dabei können maschinelle Ursachen für ein Auftreten in dem jeweiligen Teilsystem berücksichtigt werden. In diesem Zusammenhang kann sich der Ausdruck Betriebsrisiko auf eine Funktion (oder Handlung) bzw. eine Fehlfunktion des Teilsystems beziehen, und eine maschinelle Ursache kann sich auf einen technischen Zusammenhang oder Grund beziehen, der zum Auftreten der Fehlfunktion des Teilsystems führt. Eine maschinelle Ursache kann in anderen Worten eine Ursache für eine Fehlfunktion sein.

In einem weiteren Schritt können Auftretenswahrscheinlichkeiten der emergenten Risiken bestimmt werden. Dabei kann für ein emergentes Risiko eine Auftretenswahrscheinlichkeit des emergenten Risikos bestimmt werden, entsprechend kann für jedes von mehreren emergenten Risiken, oder für alle emergenten Risiken, eine jeweilige Auftretenswahrscheinlichkeit bestimmt werden. Die Auftretenswahrscheinlichkeit eines emergenten Risikos wird durch Kombinieren der Auftretenswahrscheinlichkeiten der zugrundeliegenden Betriebsrisiken bestimmt. Insbesondere wird dabei eine Multiplikation der Auftretenswahrscheinlichkeiten der einzelnen Betriebsrisiken durchgeführt.

In einem Schritt können Schweren der Betriebsrisiken der Teilsysteme bestimmt werden. Dabei kann für ein emergentes Risiko eine Schwere des emergenten Risikos bestimmt werden, entsprechend kann für jedes von mehreren emergenten Risiken, oder für alle emergenten Risiken, eine jeweilige Schwere bestimmt werden. Die Schwere eines emergenten Risikos wird durch Kombinieren der Schweren der zugrundeliegenden Betriebsrisiken bestimmt. Insbesondere wird dabei eine Addition der Schweren der einzelnen Betriebsrisiken durchgeführt. Dabei werden die Schweren unter Berücksichtigung, in anderen Worten in Abhängigkeit von, der Konfiguration des technischen Systems bestimmt.

In einem weiteren Schritt können Schweren der emergenten Risiken bestimmt werden. Dabei kann für ein emergentes Risiko eine Schwere des emergenten Risikos bestimmt werden, entsprechend kann für jedes von mehreren emergenten Risiken, oder für alle emergenten Risiken, eine jeweilige Schwere bestimmt werden. Die Schwere eines emergenten Risikos wird durch Kombinieren der Schwere der zugrundeliegenden Betriebsrisiken bestimmt. Insbesondere wird dabei eine Addition der Schweren der einzelnen Betriebsrisiken der Teilsysteme durchgeführt.

Bei einer computerimplementierten, oder automatisierten, Berechnung einer Schwere eines kombinierten Risikos entspricht eine Addition der Schweren der kombinierten Risiken zu der Schwere des kombinierten Risikos einem Worst Case. Dabei kann es empfehlenswert sein, diese kombinierte Schwere durch eine manuelle Überprüfung und Anpassung zu korrigieren.

Eine Schwere oder Schweregrad kann somit eine Auswirkung, in anderen Worten einem Ausmaß oder Bedeutung der Fehlerfolge, beschreiben. Sie kann somit einen Grad des Schadens darstellen, und kann definieren wie schwerwiegend das Ausmaß des Schadens, oder Personenschadens ist, wenn das Betriebsrisiko, d.h. die Fehlerfunktion, eintritt.

In einem Schritt können Risikoprioritätszahlen der emergenten Risiken unter Verwenden der Auftretenswahrscheinlichkeiten und der Schweren der emergenten Risiken bestimmt werden. Dabei kann für ein emergentes Risiko eine Risikoprioritätszahl des emergenten Risikos bestimmt werden, entsprechend kann für jedes von mehreren emergenten Risiken, oder für alle emergenten Risiken, eine jeweilige Risikoprioritätszahl bestimmt werden. Für ein emergentes Risiko kann in Abhängigkeit, oder in anderen Worten basierend auf, den Werten für die Auftretenswahrscheinlichkeit und der Schwere des emergenten Risikos eine Risikoprioritätszahl bestimmt werden.

Eine Risikoprioritätszahl kann somit eine Bewertung des Betriebsrisikos durch eine Kennzahl, der Risikoprioritätszahl darstellen. Dabei kann sich die Risikoprioritätszahl beispielsweise aus den Größen Wahrscheinlichkeit des Auftretens des Fehlers und Schweregrad des resultierenden Schadens, insbesondere als Produkt aus den Größen, berechnen.

In einem weiteren Schritt kann ein relevantes emergentes Risiko, oder mehrere relevante emergente Risiken, durch Vergleich der Auftretenswahrscheinlichkeit des emergenten Risikos mit einem vordefinierten Schwellenwert für die Auftretenswahrscheinlichkeit der emergenten Risiken, und durch Vergleich der Risikoprioritätszahl des emergenten Risikos einem vordefinierten Schwellenwert für die Risikoprioritätszahl der emergenten Risiken, ausgewählt werden.

In einem weiteren Schritt können die emergenten Risiken zusammen mit den Betriebsrisiken einem Verantwortlichen für das technische System angezeigt werden. In einem Beispiel kann das technische System entsprechend der emergenten Risiken von einer Person bedient oder betrieben werden. In einem anderen Beispiel kann ein Warnhinweis entsprechend einem emergenten Risiko angezeigt werden. Die Anzeige oder der Hinweis stellen einen Hinweis auf Gesundheitsrisiken dar und ermöglichen einen sicheren Betrieb der technischen Anlage.

Das erfindungsgemäße Verfahren kann zur Analyse der Betriebssicherheit eines technischen Systems, zum Bereitstellen einer Betriebserlaubnis eines technischen Systems verwendet werden, insbesondere kann eine Betriebssicherheit eines technischen Systems mittels automatisierter oder computerimplementierter Risikoanalyse bereitgestellt werden.

In einigen Beispielen kann eine zeitliche Reihenfolge der einzelnen Verfahrensschritte entsprechend der Reihenfolge in der obigen Beschreibung durchgeführt werden, in anderen Beispielen kann jedoch auch eine beliebige Reihenfolge der Verfahrensschritte vorliegen bzw. können auch nur einige der Verfahrensschritte durchgeführt werden.

Insbesondere kann das technische System von mindestens einer Person betrieben werden. Somit können die emergenten Risiken Gefährdungen der Gesundheit der Person durch das technische System, bzw. einer Maschinenanlage, darstellen. Zum Beispiel kann eine Person eine menschliche Person, ein Mensch, ein Benutzer, ein Bediener, oder ein Operator des technischen Systems sein.

Eine Vorrichtung ist konfiguriert, um eine Analyse der Betriebssicherheit eines technischen Systems durchzuführen. Dabei umfasst die Vorrichtung eine Recheneinheit, eine Speichereinheit, eine Schnittstelleneinheit, und eine Datenbank. Weiter speichert die Speichereinheit von der Recheneinheit ausführbare Befehle, wobei die Vorrichtung ausgebildet ist, bei Ausführung der Befehle in der Recheneinheit die in Anspruch 1 definierten Schritte auszuführen.

In einem Schritt wird eine Konfiguration eines technischen Systems umfassend mehrere Teilsysteme über die Schnittstelleneinheit durch die Recheneinheit empfangen.

In einem weiteren Schritt werden Betriebsrisiken der Teilsysteme aus der Datenbank empfangen. In anderen Worten Betriebsrisiken werden aus der Datenbank ausgelesen, und an die Recheneinheit bereitgestellt.

Ein Teilsystem, oder jedes von mehreren Teilsystemen, weist dabei mindestens ein Betriebsrisiko auf. In anderen Worten, jedes Betriebsrisiko ist einem Teilsystem, oder genau einem Teilsystem zugeordnet.

In einem weiteren Schritt wird eine Vielzahl von emergenten Risiken durch Kombination von Betriebsrisiken unterschiedlicher Teilsysteme bestimmt.

Die Vorrichtung kann weiter konfiguriert sein, um ein beliebiges anderes Verfahren oder eine beliebige Kombination von Verfahren gemäß der vorliegenden Offenbarung durchzuführen.

Ein Computerprogramm umfasst Befehle, die bei der Ausführung des Programms durch einen Computer diesen veranlassen, die Schritte eines beliebigen Verfahrens gemäß der vorliegenden Offenbarung auszuführen.

Ein elektronisch lesbarer Datenträger umfasst Befehle, die bei der Ausführung durch einen Computer diesen veranlassen, die Schritte eines beliebigen Verfahrens gemäß der vorliegenden Offenbarung auszuführen.

Für eine solche Vorrichtung, Computerprogramm und elektronisch lesbaren Datenträger können technische Effekte erzielt werden, die den technischen Effekten für die Verfahren gemäß der vorliegenden Offenbarung entsprechen.

Obwohl die in der obigen Zusammenfassung und der folgenden detaillierten Beschreibung beschriebenen spezifischen Merkmale im Zusammenhang mit spezifischen Beispielen beschrieben werden, ist zu verstehen, dass die Merkmale nicht nur in den jeweiligen Kombinationen verwendet werden können, sondern auch isoliert oder in beliebigen Kombinationen verwendet werden können, und Merkmale aus verschiedenen Beispielen für die Verfahren, Analysesysteme, Computerprogramme und elektronisch lesbare Datenträger miteinander kombiniert werden können und miteinander korrelieren, sofern nicht ausdrücklich anders angegeben.

Es ist demnach zu verstehen, dass ein Verfahren gemäß der vorliegenden Offenbarung mit einem beliebigen Merkmal, dass im Zusammenhang mit einer Vorrichtung gemäß der vorliegenden Offenbarung beschrieben ist, verbessert werden kann, sowie dass eine Vorrichtung gemäß der offenen Erfahrung mit einem beliebigen Merkmal, dass im Zusammenhang mit einem der Verfahren beschrieben wurde, verbessert werden kann. Insbesondere kann dabei die Vorrichtung so konfiguriert sein, dass Schritte zum Bestimmen, Auswählen, oder Kombinieren durch die Rechenvorrichtung durchgeführt werden.

Die obige Zusammenfassung soll daher nur einen kurzen Überblick über einige Merkmale einiger Ausführungsformen und Implementierungen geben und ist nicht als Einschränkung zu verstehen. Andere Ausführungsformen können andere als die oben beschriebenen Merkmale umfassen.

### Kurze Beschreibung der Zeichnungen

Die Erfindung wird nachfolgend unter Bezugnahme auf die beiliegenden Zeichnungen näher erläutert.
- Figur 1: zeigt schematisch ein technisches System mit Teilsystemen, gemäß Ausführungsbeispielen der Erfindung.
- Figur 2: zeigt schematisch ein Metamodell zur Berechnung von emergentem Verhalten eines technischen Systems, gemäß Ausführungsbeispielen der Erfindung.
- Figur 3: zeigt ein Flussdiagramm mit Schritten zur Risikoanalyse eines technischen Systems, gemäß Ausführungsbeispielen der Erfindung.
- Figur 4: zeigt schematisch eine Vorrichtung, mit dem ein Verfahren zur Risikoanalyse eines technischen Systems erfindungsgemäß durchgeführt werden kann.

### Detaillierte Beschreibung

Die vorstehend genannten Elemente, Merkmale, Schritte und Konzepte der vorliegenden Offenbarung werden aus der folgenden detaillierten Beschreibung anhand von exemplarischen Ausführungsbeispielen, die unter Bezugnahme auf die beiliegenden Zeichnungen erläutert werden, ersichtlich.

Die Zeichnungen sind als schematische Darstellungen zu betrachten und die in den Zeichnungen dargestellten Elemente sind nicht unbedingt maßstabsgetreu dargestellt. Vielmehr werden die verschiedenen Elemente so dargestellt, dass ihre Funktion und ihr allgemeiner Zweck für einen Fachmann ersichtlich werden. Jede Verbindung oder Kopplung zwischen Funktionsblöcken, Vorrichtungen, Komponenten oder anderen physikalischen oder funktionellen Einheiten, die in den Zeichnungen oder hierin beschrieben sind, kann auch durch eine indirekte Verbindung oder Kopplung realisiert werden. Eine Kopplung zwischen den Komponenten kann auch über eine drahtlose Verbindung hergestellt werden. Funktionsblöcke können in Hardware, Firmware, Software oder einer Kombination davon implementiert werden.

Im Folgenden werden Ausführungsbeispiele unter Bezugnahme auf die beiliegenden Zeichnungen ausführlich beschrieben. Es ist zu beachten, dass die folgende Beschreibung der Ausführungsbeispiele nicht in einem engen Sinne zu verstehen ist. Der Umfang der Erfindung soll nicht durch die im Folgenden beschriebenen Ausführungsbeispiele oder durch die Zeichnungen eingeschränkt werden, die nur zur Veranschaulichung dienen. Beispiele der vorliegenden Offenbarung betreffen ein automatisiert berechnetes Vollständigkeitskriterium zur Analyse von emergentem Verhalten in Produktionsanlagen,
ein computergestütztes Berechnen von emergentem Verhalten, sowie eine computergestützte Analyse von emergenten Risiken eines technischen Systems. Weitere Beispiele der vorliegenden Offenbarung betreffen ein computergestütztes Verfahren für eine FMEA, insbesondere eine EHS-Risikoanalyse eines technischen Systems.

Produktionsanlagen müssen bestimmten Richtlinien für Betriebssicherheit genügen (s.g. EHS, Environment, Health and Safety Richtlinien). In Deutschland ist das zum Beispiel die ISO12100. Dabei müssen unter anderem Risiken identifiziert werden, die sich beim Betrieb einer Produktionsanlage für die Arbeiter, die mit diesen Maschinen interagieren, ergeben. Ein Beispiel für ein solches Risiko ist eine Quetschstelle wie sie etwa beim Betrieb einer Presse auftreten kann. Als Maßnahmen für die Verringerung eines solchen Risikos können beispielsweise elektronische Maßnahmen, wie ein Sicherheitsschalter oder arbeitstechnische Vorgaben herangezogen werden, wie etwa Betrieb der Maschine ausschließlich, wenn alle Arbeiter den Raum verlassen haben.

Eine populäre Analysetechnik, um Risiken und Maßnahmen zu allokieren und zu dokumentieren ist die FMEA Analyse. Da diese Art der Analyse ein manueller und aufwändiger Vorgang ist, ist hier ein computerimplementiertes Verfahren vorteilhaft. Da bisherige Automatisierungen nur einzelne Risiken in Betracht gezogen haben, soll hier zusätzlich s.g. emergentes Verhalten mit analysiert werden. Dabei handelt es sich um Verhalten und damit verbundene Risiken, die sich erst durch die Zusammenkunft zweier Maschinen ergeben. Beispielsweise ein Roboterarm für sich alleine hat zunächst keine Scherstelle. Zwei Roboterarme, die miteinander interagieren können, aber das Risiko einer Scherstelle bilden.

Wenn jetzt das Risiko von Scherstellen durch die Vorausberechnung in der Software abgefangen wird, bleibt damit nur ein verringertes Restrisiko während des Betriebes übrig. Dass jetzt zusätzlich ein weiteres Risiko gleichzeitig auftritt hat damit eine noch weiter verringerte Eintrittswahrscheinlichkeit. Und darauf beruht der Kern der Erfindung. Wenn emergentes Risiko durch die Kombination zweier Risiken auftritt, kann dieses automatisiert aus einer Datenbank berechnet werden. Damit stehen die Auftretenswahrscheinlichkeiten für die Einzelrisiken fest. In Kombination mit einem oder mehreren weiteren Risiken verringert sich die Eintrittswahrscheinlichkeit weiter. Ist die Eintrittswahrscheinlichkeit der Kombination zweier Risiken ausreichend gering (akzeptierbares Risiko), dann ist dies ein valides Abbruchkriterium für eine weitere automatisierte Analyse, da die Eintrittswahrscheinlichkeit nur geringer sein würde.

Neben der reinen Automatisierung des Vorgangs der Analyse und der damit verbundene Kostenersparnis ergibt wich weiterhin die Möglichkeit bei einer Änderung der Konfiguration einer Maschine, beispielsweise durch Hinzufügen eines weiteren Roboterarms, eine optimale Maßnahmenallkation vorzunehmen die mit dem geringsten Ressourceneinsatz das bestmögliche Maß an Sicherheit bietet.

In der Literatur finden sich zahlreiche Verfahren zur automatisierten Berechnung oder rechnergestützten Organisation von FMEA Tabellen. Eine Übersicht ist z.B. in Höfig, Kai, Marc Zeller, and Lars Grunske. "MetaFMEA-A framework for reusable FMEAs." International Symposium on Model-Based Safety and Assessmemt. Springer, Cham, 2014, zu finden. In diesen Arbeiten geht es allerdings vermehrt um die Automatisierung der Analyse im Allgemeinen und nicht um die Berechnung von möglicherweise emergentem Verhalten. Zusätzlich zielen die dort zitierten Schriften hauptsächlich auf Aspekte der funktionalen Sicherheit ab und nicht wie hier, wo der Fokus auf der Betriebssicherheit liegt.

Eine Automatisierung der benötigten Analyse der Betriebssicherheit mittels FMEA für Industrieanlagen ist in dem Dokument Awad, Ramez, Manuel Fechter, and Jessica van Heerden. "Integrated risk assessment and safety consideration during design of HRC workplaces." 2017 22nd IEEE International Conference on Emerging Technologies and Factory Automation (ETFA). IEEE, 2017, beschrieben. In diesem Papier wird von einer existierenden Menge von Gefährdungen ausgegangen (letzter Absatz Seite 3), die dann über eine Funktion mit ihren Ursachen verbunden sind. Draus wird nach manueller Eingabe von Auftretenswahrscheinlichkeit, Schwere und Kontrollierbarkeit eine Risikoprioritätszahl berechnet. Zusätzlich kann dann manuell eine Sicherheitsmaßname ausgewählt werden und die angepasste Risikoprioritätszahl wird erneut berechnet.

Im Allgemeinen sehen Beispiele der vorliegenden Offenbarung eine Vielzahl von Schaltungen, Datenspeichern, Schnittstellen oder elektrische Verarbeitungsvorrichtungen z.B. Prozessoren vor. Alle Verweise auf diese Einheiten und andere elektrische Geräte sowie die von ihnen bereitgestellte Funktionen sind nicht auf das beschränkt, was veranschaulicht und beschrieben wird. Während den verschiedenen Schaltkreisen oder anderen offenbarten elektrischen Geräten bestimmte Bezeichnungen zugeordnet werden können, sind diese Bezeichnungen nicht dazu bestimmt, den Funktionsumfang der Schaltkreise und der anderen elektrischen Geräte einzuschränken. Diese Schaltkreise und andere elektrische Geräte können je nach der gewünschten Art der elektrischen Ausführung miteinander kombiniert und/oder voneinander getrennt werden. Es ist zu verstehen, dass jede offenbarte Schaltung oder andere elektrische Vorrichtung eine beliebige Anzahl von Mikrocontrollern, eine Grafikprozessoreinheit (GPU), integrierte Schaltungen, Speichervorrichtungen, z.B. FLASH, Arbeitsspeicher(RAM), Read Only Memory (ROM), elektrisch programmierbarer Read Only Memory (EPROM), elektrisch löschbarer programmierbarer Read Only Memory (EEPROM), oder beliebige andere geeignete Ausführungsformen derselben umfassen können, sowie Software, welche miteinander zusammenarbeiten, um die hierin offenbarten Verfahrensschritte durchzuführen. Darüber hinaus kann jede der elektrischen Vorrichtungen konfiguriert sein, um Programmcode auszuführen, der in einem Rechnerlesbaren Datenträger enthalten ist, und der konfiguriert ist, um eine beliebige Anzahl von Schritten gemäß den Verfahren der vorliegenden Offenbarung auszuführen.

Im Folgenden werden Techniken für eine computergestützte Berechnung sogenannter emergente Risiken beschrieben, das sind neue Gefährdungen, die sich erst aus dem Zusammenspiel ansonsten unkritischer Maschinen ergeben können.

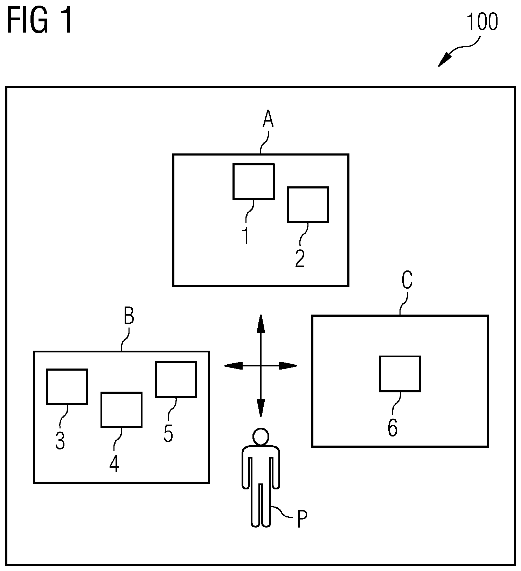

Figur 1 zeigt schematisch ein technisches System 100 mit Teilsystemen A,B,C, gemäß Ausführungsbeispielen der Erfindung.

Wie in Figur 1 abgebildet umfasst das technische System 100 die technischen Teilsysteme A, B, C. Eine Person P und die Teilsysteme A, B, C interagieren miteinander, wie durch die Pfeile dargestellt. Das Teilsystem A weist die Betriebsrisiken 1,2 auf. Das Teilsystem B weist die Betriebsrisiken 3, 4,5 auf. Das Teilsystem C weist das Betriebsrisiko 6 auf. Dabei können die Teilsysteme ABC des technischen Systems 100 in räumlicher Nähe zueinander aufgestellt sein, wodurch für die Person P bei einem Wirken eines Teilsystems mit einem zweiten Teilsystem, oder weiteren Teilsystemen, eine Gesundheitsgefährdung auftreten kann.

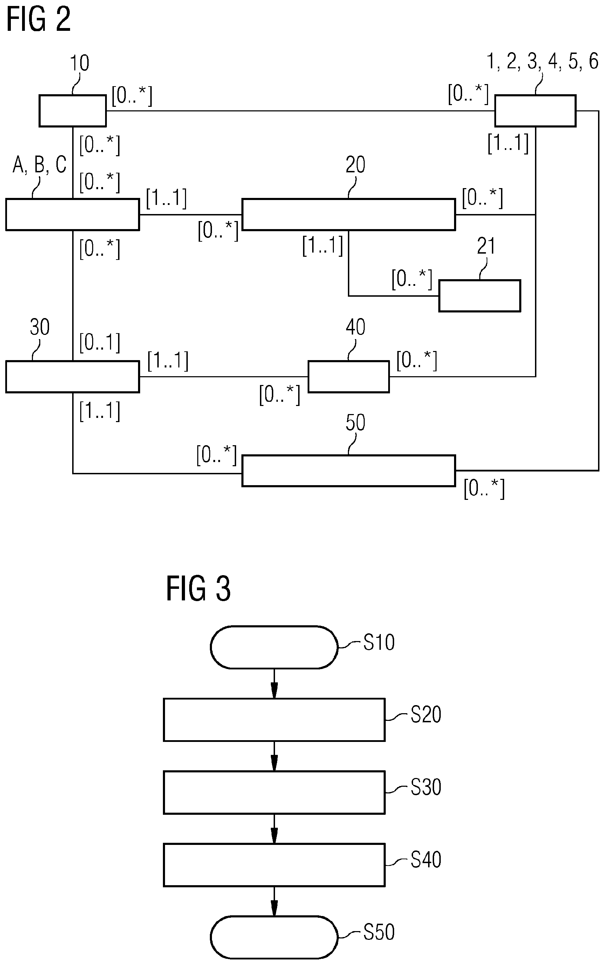

Figur 2 zeigt schematisch ein Metamodell zur Berechnung von emergentem Verhalten eines technischen Systems, gemäß Ausführungsbeispielen der Erfindung.

Das Meta-Modell der Figur 2 beschreibt Zuordnungen zwischen den abstrakten Elementen: Maschinentyp 10, Betriebsrisiken 1,2,3,4,5,6, konkrete Maschinen A, B, C, Auftretenswahrscheinlichkeit 20, Ursache 21, Konfiguration 30 eines technischen Systems 100, Schwere 40, und berechnetes kombiniertes Risiko 50.

Figur 2 verdeutlicht, dass in einem technischen System ein bestimmter Typ (eines technischen Teilsystems), oder in anderen Worten Maschinentyp, 10 enthalten sein kann.

Ein Typ 10 ist hierbei ein abstraktes Element dem später konkrete Maschinen A,B,C zugeordnet werden. Zum Beispiel ein einarmiger Roboter. Zu einem solchen Typ gehört eine Menge von Betriebsrisiken 1,2,3,4,5,6 die typischerweise bei jeder Instanz einer konkreten Maschine A, B, C die zu einem solchen Typ 10 gehört auftreten können.

Eine konkrete Maschine A,B,C instanziiert einen solchen Typ 10 und wird in einer bestimmten Konfiguration 30 mit anderen Maschinen A,B,C verwendet. Zum Beispiel besteht eine Fertigungskonfiguration aus einem Roboterarm mit dem Risiko einer unkontrollierten Bewegung und einem Transportband mit dem Risiko einer zu hohen Transportgeschwindigkeit.

Wie in Figur 2 gezeigt, kann somit einem Maschinentyp 10 keines oder eine beliebige Anzahl von Betriebsrisiken 1,2,3,4,5,6 zugeordnet sein. Entsprechend kann einem Betriebsrisiko 1,2,3,4,5,6 keiner oder eine beliebige Anzahl von Maschinentypen 10 zugeordnet sein.

Die konkreten Maschinen A, B, C in Figur 2 entsprechen Teilsystemen eines technischen Systems 100. Dabei kann, wie in Figur 2 dargestellt, einem Maschinentypen 10 keine konkrete Maschine A,B,C oder eine beliebige Anzahl von konkreten Maschinen A, B, C zugeordnet sein. Entsprechend kann einer der konkreten Maschinen A, B, C kein Maschinentyp 10 oder eine beliebige Anzahl von Maschinentypen 10 zugeordnet sein.

In Figur 2 wird verdeutlicht, dass eine Auftretenswahrscheinlichkeit 20 eine konkrete Maschine A, B, C mit einem Betriebsrisiko 1,2,3,4,5,6 verbindet. Weiter sind jeder Auftretenswahrscheinlichkeit 20 eine oder beliebig viele maschinelle Ursachen 21 zugeordnet.

Das technische System 100 wird beschrieben durch eine Konfiguration 30, welche definiert, welche konkrete Maschinen A, B, C, und gegebenenfalls in welcher Anzahl die konkrete Maschine A, B, C in dem technischen System 100 enthalten sind. In der Konfiguration 30 können auch weitere konkrete Maschinen von weiteren Maschinentypen enthalten sein. Zudem definiert die Konfiguration 30 in welcher Anordnung die konkreten Maschinen A, B, C in dem technischen System 100 angeordnet sind, woraus sich eine Wirkung bzw. Wechselwirkung der technischen Teilsysteme aufeinander ergeben kann.

Einem Betriebsrisiko 1,2,3,4,5,6 kann basierend auf einer Konfiguration 30 eine Schwere 40 zugeordnet werden. In anderen Worten, innerhalb einer Konfiguration 30 weist ein Betriebsrisiko 1,2,3,4,5,6 eine Schwere 40 auf.

Weiter kann einer Konfiguration 30, basierend auf den enthaltenen konkreten Maschinen A, B, C, und den zugeordneten Betriebsrisiken 1,2,3,4,5,6 ein emergentes Risiko 50 oder eine beliebige Anzahl von emergenten Risiken 50 zugeordnet werden. Die emergenten Risiken 50 werden durch beliebige Kombination der einzelnen Betriebsrisiken 1,2,3,4,5,6 gebildet, sie entsprechen daher berechneten kombinierten Risiken.

Da je nach Betriebsart die Betriebsrisiken 1,2,3,4,5,6, die nun über den Typen 10 einer Maschinen bekannt sind, mit unterschiedlicher Auftretenswahrscheinlichkeit 20 auftreten können, hat zwar jede Maschine A,B,C des gleichen Typs 10 auch die gleichen Risiken 1,2,3,4,5,6, aber mit unterschiedlichen Auftretenswahrscheinlichkeiten 20. Zum Beispiel ist die Überschreitung der Geschwindigkeit eines Transportbandes bei einem Modell möglich, bei einem anderen Modell aber bauartbedingt ausgeschlossen. Bei beiden ist das Risiko 1,2,3,4,5,6 prinzipiell vorhanden, bei einer Art ist es allerdings vernachlässigbar, d.h. die Auftretenswahrscheinlichkeit 20 ist vernachlässigbar. Zu jedem konkreten Auftreten eines Risikos 1,2,3,4,5,6 gehören maschinelle Ursachen 21 die sich in der Maschine A, B, C finden lassen. So kann die Bewegung außerhalb der gewünschten Parameter eines Roboterarms aus einem elektrischen Defekt begründet sein, oder aus einem Programmierfehler. Aus allen maschinellen Ursachen 21 ergibt sich dann die konkrete Höhe der Auftretenswahrscheinlichkeit 20.

Ähnlich verhält es sich mit der Schwere 40 falls ein bestimmtes Risiko 1,2,3,4,5,6 auftritt. Beispielsweise ist die überhöhte Geschwindigkeit eines Transportbandes in einer Konfiguration 30 harmlos, in einer anderen Konfiguration 30 schwerwiegender. So ist der Transport relativ kompakter Einheiten mit hohem Gewicht bei leicht überhöhter Geschwindigkeit unproblematisch. In dieser Konfiguration 30 ist die Schwere 40 des Risikos gering. In einer anderen Konfiguration 30 wo das Transportband des gleichen Typs oder der gleichen Art Elemente mit ungünstig hohem Querschnitt und geringem Gewicht transportiert schwerwiegender, da die transportierten Elemente vom Band fallen und Arbeiter verletzten könnten.

Da bei Verwendung des in Figur 2 abgebildeten Meta-Modells nun alle Risiken 1,2,3,4,5,6, maschinelle Ursachen 21, Auftretenswahrscheinlichkeiten 20 und Schweren 40 bekannt sind, lassen sich nun computergestützt neue Kombinationen von Risiken 1,2,3,4,5,6 berechnen: Neue Risiken können sich aus dem gleichzeitigen Auftreten zweier Risiken 1,2,3,4,5,6 ergeben. So kann es zum Beispiel sein, dass ein Transportband durch überhöhte Geschwindigkeit einen Arbeiter mitreißt und gleichzeitig eine Maßnahme versagt, die verhindern soll, dass ein Roboterarm einen Menschen verletzt.

Aus dieser Kombination von Risiken 1,2,3,4,5,6 ist in dieser Konfiguration 30 nun ein neues emergentes Risiko 50 entstanden. Alle potentiellen emergente Risiken 50 lassen sich nun durch die Angabe aller möglichen Kombinationen von Betriebsrisiken 1,2,3,4,5,6 der beteiligten konkreten Maschinen A, B, C berechnen.

Die nachfolgende Auflistung führt zu jeder Maschine A, B, C eine Menge von Betriebsrisiken 1,2,3,4,5,6 auf.
1. Maschine A umfasst Betriebsrisiken 1 und 2.
2. Maschine B umfasst Betriebsrisiken 3, 4 und 5.
3. Maschine C umfasst Betriebsrisiko 6.

Daraus ergeben sich nun eine Vielzahl von Möglichkeiten für emergente Risiken, z.B. 1,3,6 oder 2,6 oder 3,4,6 usw. Allerdings sind nicht alle der möglichen Kombinationen relevant. Automatisiert lassen sich alle Kombinationen in einem ersten Schritt berechnen. Eine solche Kombination von Risiken ist ein emergentes Risiko 50, oder in anderen Worten ein berechnetes kombiniertes Risiko, im Meta-Modell der Figur 2.

In einem zweiten Schritt werden dann die Risikoprioritätszahlen für die emergenten Risiken 50 berechnet aus der Auftretenswahrscheinlichkeit 20 und der Schwere 40. Das Analysesystem schlägt dann anhand eines voreingestellten Zielwertes nur die Kombinationen vor, die entweder als wahrscheinlich in Frage kommen oder die über einer bestimmten Risikoprioritätszahl liegen. In anderen Worten, die Auftretenswahrscheinlichkeiten und die Risikoprioritätszahlen der emergenten Risiken 50 werden mit vordefinierten Schwellenwerten verglichen. Alle anderen Kombinationen von Risiken sind entweder vernachlässigbar unwahrscheinlich oder harmlos.

Nachdem diese automatisierte Gruppierung in relevante berechnete Risiken und nicht relevante berechnete Risiken vorgenommen wurde, kann in einem nächsten Schritt die Anlage z.B. durch die Installation zusätzlicher Schutzmaßnahmen verbessert werden. Als Maßnahmen können beispielsweise zusätzliche Lichtschranken eingebaut werden, die das Vorhandensein von Menschen detektieren und damit die Schwere einer unkontrollierten Bewegung deutlich reduzieren.

Sind alle Risiken auf ein akzeptables Maß reduziert, gilt das System als sicher.

Die folgenden Anwendungsszenarien sind für ein erfindungsgemäße Verfahren und Vorrichtung bzw. Analysesystem, welche zur Analyse von emergentem Verhalten eines technischen Systems konfiguriert sind, möglich.

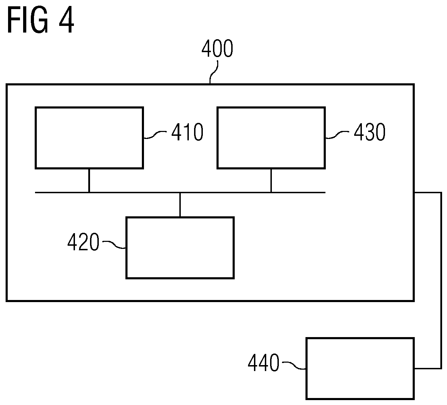

Ein erfindungsgemäßes Analysesystem kann in den Designprozess einer Fabrikplanung integriert sein. Bei jedem Design Schritt und den damit verbundenen Maschinen A, B, C werden automatisch die dazugehörigen Risiken 1,2,3,4,5,6 aus einer Datenbank 440, wie in Figur 4 gezeigt, berechnet und angezeigt. Daraus entstehende emergente Risiken 50 können sofort in den Design Prozess zurückgespielt werden und die dazu passenden Maßnahmen lassen sich beispielsweise durch ein intelligentes Reccomendersystem als Lösungen für zu hohe emergente Risiken vorschlagen. Ein derartiges Recommender System kann aus der Vergangenheit lernen, z.B. dass Scherstellen über Lichtschranken abgesichert werden. Dabei kommen in einer weiteren Ausgestaltung auch lernbasierte Ansätze aus der Gruppe bestehend aus einem Neuronalen Netzwerk, bestärkendes Lernen ("Reinforcement Learning") oder einem sonstigen Algorithmus des maschinellen Lernens zum Einsatz. Dementsprechend können jegliche Algorithmen des maschinellen Lernens flexibel abhängig von Anforderungen oder Nutzerpräferenzen ausgewählt werden.

Da ein solches System auch in der Lage ist, die Risiken der bereits im Betrieb befindlichen Maschinen zu überwachen, können die Auftretenswahrscheinlichkeiten laufend aktualisiert werden. Sollte, beispielsweise durch falsche Annahmen im Design Prozess einer Maschine, andere Auftretenswahrscheinlichkeiten gemessen werden als vorher angenommen, können diese Auftretenswahrscheinlichkeiten in alle Analysen übernommen werden wo dieser Anlagentyp oder diese konkrete Anlage verwendet wurde und so weiteres Fehlverhalten verhindern.

Außerdem lässt sich die Datenbank 440 von Risiken 1,2,3,4,5,6 so ständig erweitern: treten neue, vorher unbekannte Risiken 1,2,3,4,5,6 bei einer konkreten Maschine A,B,C auf, wird dieses neue Risiko in das Modell der Risiken zu diesem Typ 10 übernommen und lässt sich so automatisiert in allen bereits vorhandenen Instanzen dieses Typs 10 analysieren. Durch ein neues Risiko einer konkreten Maschine A,B,C ergibt sich also ein neues Risiko eines Typs 10 und damit auch neue Kombinationen von Risiken 50 mit anderen Maschinen A,B,C. Mit diesem System ist es also möglich, bei Auftreten eines unwichtig erscheinenden Risikos einer konkreten Maschine schwerwiegende emergente Risiken 50 in anderen Konfigurationen 30 aufzudecken.

Figur 3 zeigt ein Flussdiagramm mit Schritten zur Risikoanalyse eines technischen Systems, gemäß Ausführungsbeispielen der Erfindung.

Das Verfahren beginnt in Schritt S10. In Schritt S20 wird eine Konfiguration eines technischen Systems, oder der Teilsysteme eines technischen Systems, empfangen, wobei das technische System mehrere Teilsysteme umfasst. In Schritt S30 werden Betriebsrisiken der Teilsysteme bestimmt, wobei jedes Betriebsrisiko einem Teilsystem zugeordnet ist. In Schritt S40 wird eine Vielzahl emergenter Risiken des technischen Systems durch Kombination von Betriebsrisiken unterschiedlicher Teilsysteme bestimmt. Das Verfahren endet in Schritt S50.

Figur 4 zeigt schematisch eine Vorrichtung 400, mit der ein Verfahren zur Risikoanalyse eines technischen Systems 100 erfindungsgemäß durchgeführt werden kann.

Die Vorrichtung 400 umfasst mindestens Recheneinheit 410, eine Speichereinheit 420 sowie eine Schnittstelleneinheit 430. Die Vorrichtung 400 kann über die Schnittstelle 430 mit einer Datenbank 440 verbunden sein. Die Datenbank 440 durch kann eine beliebige Datenbank, insbesondere eine verteilte Datenbank. Erfindungsgemäß ist die Vorrichtung 400 ist konfiguriert, um eine Analyse der Betriebssicherheit eines technischen Systems durchzuführen.

Dabei speichert die 420 von der mindestens einen Recheneinheit 410 ausführbare Befehle, und wobei die Vorrichtung 400 ausgebildet ist, bei der Ausführung der Befehle in der Recheneinheit 410 folgende Schritte auszuführen.

In einem ersten Schritt wird eine Konfiguration 30 eines technischen Systems 100 umfassend mehrere Teilsysteme A, B, C über die Schnittstelleneinheit 430 an die Recheneinheit 410 bereitgestellt.

In einem weiteren Schritt werden durch die Recheneinheit 410 Betriebsrisiken 1,2,3,4,5,6 der Teilsysteme A, B, C aus der Datenbank 440 an die Recheneinheit 410 bereitgestellt. Dabei ist jedes Betriebsrisiko einem Teilsystem A, B, C zugeordnet.

In einem weiteren Schritt wird eine Vielzahl emergenter Risiken 50 durch Kombinieren der Betriebsrisiken 1,2,3,4,5,6 unterschiedlicher Teilsysteme A, B, C bestimmt.

Zusammenfassend wird ein Verfahren zur Risikoanalyse eines technischen Systems, sowie eine entsprechende Analysevorrichtung bereitgestellt, welche es ermöglichen in einem computergestützten Verfahren basierend auf unwichtig erscheinenden Risiken einer konkreten Maschine schwerwiegende emergente Risiken in einer Konfiguration eines technischen Systems aufzudecken.

Obwohl die Erfindung in Bezug auf bestimmte bevorzugte Ausführungsbeispiele gezeigt und beschrieben wurde, werden Äquivalente und Änderungen durch Fachleuten nach dem Lesen und Verstehen der Beschreibung vorgenommen. Die vorliegende Erfindung umfasst alle derartigen Äquivalente und Änderungen und ist nur durch den Umfang der beiliegenden Ansprüche begrenzt.

## Patentansprüche

1. Computerimplementiertes Verfahren zur Analyse der Betriebssicherheit eines technischen Systems (100), umfassend die folgenden Schritte:
- Empfangen einer Konfiguration (40) eines technischen Systems (100) umfassend mehrere Teilsysteme (A,B,C), wobei die Konfiguration (40) einen Aufbau des technischen Systems (100) aus den technischen Teilsystemen (A,B,C) definiert;
- Empfangen von Betriebsrisiken (1,2,3,4,5,6) der Teilsysteme (A,B,C), wobei jedes Betriebsrisiko (1,2,3,4,5,6) einem Teilsystem (A,B,C) zugeordnet ist; **gekennzeichnet durch** den Schritt
- Bestimmen einer Vielzahl emergenter Risiken (50) für die Konfiguration des technischen Systems (100), durch Bilden von Kombinationen von Betriebsrisiken (1,2,3,4,5,6) der unterschiedlichen Teilsysteme (A,B,C), wobei eine Kombination von Betriebsrisiken (1,2,3,4,5,6) ein gleichzeitiges Auftreten von mindestens zwei Betriebsrisiken (1,2,3,4,5,6) zweier unterschiedlicher Teilsysteme (A,B,C) des technischen Systems (100) umfasst, und wobei ein emergentes Risiko (50) eine Gefährdung der Gesundheit einer Person (P) durch das technische System (100) darstellt, welche sich durch ein gleichzeitiges Einwirken von mindestens zwei Betriebsrisiken (1,2,3,4,5,6) zweier unterschiedlicher Teilsysteme (A,B,C) des technischen Systems (100) auf die Person (P) ergibt, wobei die bestimmten emergenten Risiken sofort in den Design Prozess zurückgespielt werden, indem in der Anlage zusätzliche Schutzmaßnahmen installiert werden.

2. Verfahren nach Anspruch 1, weiter umfassend:
- Bestimmen einer Maßnahme, welche mindestens eines der emergenten Risiken verringert;
wobei das Bestimmen einer Maßnahme ein Anwenden von trainierten Funktionen auf die emergenten Risiken umfasst, wobei die trainierten Funktionen mit bekannten Risiken und zugehörige bekannte Maßnahmen, welche die bekannten Risiken verringern, trainiert wurden.

3. Verfahren nach einem der vorhergehenden Ansprüche, wobei das Bestimmen einer Vielzahl emergenter Risiken (50) ein automatisches Bestimmen aller möglichen Kombinationen der einzelnen Betriebsrisiken (1,2,3,4,5,6) der Teilsysteme (A,B,C) umfasst.

4. Verfahren nach einem der vorhergehenden Ansprüche, weiter umfassend:
- Bestimmen von Auftretenswahrscheinlichkeiten (20) für die Betriebsrisiken (1,2,3,4,5,6) unter Berücksichtigung von maschinellen Ursachen (21) für ein Auftreten in dem jeweiligen Teilsystem (A,B,C); und
- Bestimmen von Auftretenswahrscheinlichkeiten der emergenten Risiken (50) durch Kombinieren der Auftretenswahrscheinlichkeiten (20) der Betriebsrisiken (1,2,3,4,5,6).

5. Verfahren nach einem der vorhergehenden Ansprüche, weiter umfassend:
- Bestimmen von Schweren (40) der Betriebsrisiken (1,2,3,4,5,6) der Teilsysteme (A,B,C) unter Berücksichtigung der Konfiguration (40) des technischen Systems (100); und
- Bestimmen von Schweren der emergenten Risiken (50) durch Kombination der Schweren (40) der Betriebsrisiken (1,2,3,4,5,6) der Teilsysteme (A,B,C).

6. Verfahren nach Anspruch 4 und 5, weiter umfassend:
- Berechnen von Risikoprioritätszahlen der emergenten Risiken (50) unter Verwenden der Auftretenswahrscheinlichkeiten (20) und der Schweren (40) der emergenten Risiken (50) .

7. Verfahren nach Anspruch 6, weiter umfassend:
- Auswählen von relevanten emergenten Risiken, durch Vergleich der Auftretenswahrscheinlichkeiten der emergenten Risiken (50) mit einem vordefinierten Schwellenwert für die Auftretenswahrscheinlichkeit und der Risikoprioritätszahl der emergenten Risiken (50) mit einem vordefinierten Schwellenwert für die Risikoprioritätszahl.

8. Vorrichtung (400), welche ausgebildet ist, eine Analyse der Betriebssicherheit eines technischen Systems (100) durchzuführen, wobei die Vorrichtung (400) eine Recheneinheit (410), eine Speichereinheit (420), eine Schnittstelleneinheit (430) und eine Datenbank (440) umfasst, wobei die Speichereinheit (420) von der Recheneinheit (410) ausführbare Befehle speichert, und wobei die Vorrichtung (400) ausgebildet ist, bei der Ausführung der Befehle in der Recheneinheit (410) das Verfahren nach Anspruch 1 auszuführen.

9. Vorrichtung nach Anspruch 8, welche ausgebildet ist eines der Verfahren nach den Ansprüchen 2-7 durchzuführen.

10. Computerprogramm umfassend Befehle, die bei der Ausführung des Computerprogramms durch einen Computer diesen veranlassen, die Schritte eines beliebigen Verfahrens nach einem der Ansprüche 1-7 durchzuführen.

11. Elektronisch lesbarer Datenträger umfassend Befehle, die bei der Ausführung durch einen Computer diesen veranlassen, die Schritte eines beliebigen Verfahrens nach einem der Ansprüche 1-7 durchzuführen.

## Claims

1. Computer-implemented method for analysing the dependability of a technical system (100), comprising the following steps:
- receiving a configuration (40) of a technical system (100) comprising multiple subsystems (A, B, C), wherein the configuration (40) defines a structure of the technical system (100) comprising the technical subsystems (A, B, C);
- receiving operating risks (1, 2, 3, 4, 5, 6) of the subsystems (A, B, C), wherein each operating risk (1, 2, 3, 4, 5, 6) is associated with a subsystem (A, B, C); **characterized by** the step of
- determining a multiplicity of emergent risks (50) for the configuration of the technical system (100) by forming combinations of operating risks (1, 2, 3, 4, 5, 6) of the different subsystems (A, B, C), wherein a combination of operating risks (1, 2, 3, 4, 5, 6) comprises a simultaneous occurrence of at least two operating risks (1, 2, 3, 4, 5, 6) of two different subsystems (A, B, C) of the technical system (100), and wherein an emergent risk (50) represents a threat to the health of a person (P) by the technical system (100) that results from a simultaneous effect of at least two operating risks (1, 2, 3, 4, 5, 6) of two different subsystems (A, B, C) of the technical system (100) on the person (P), wherein the determined emergent risks are immediately passed back to the design process by installing additional protective measures in the installation.

2. Method according to Claim 1, further comprising:
- determining a measure that reduces at least one of the emergent risks;
wherein the determining of a measure comprises applying trained functions to the emergent risks, the trained functions having been trained with known risks and related known measures that reduce the known risks.

3. Method according to either of the preceding claims, wherein the determining of a multiplicity of emergent risks (50) comprises automatically determining all possible combinations of the individual operating risks (1, 2, 3, 4, 5, 6) of the subsystems (A, B, C).

4. Method according to one of the preceding claims, further comprising:
- determining probabilities of occurrence (20) for the operating risks (1, 2, 3, 4, 5, 6) in light of mechanical causes (21) of an occurrence in the respective subsystem (A, B, C); and
- determining probabilities of occurrence of the emergent risks (50) by combining the probabilities of occurrence (20) of the operating risks (1, 2, 3, 4, 5, 6).

5. Method according to one of the preceding claims, further comprising:
- determining seriousnesses (40) of the operating risks (1, 2, 3, 4, 5, 6) of the subsystems (A, B, C) in light of the configuration (40) of the technical system (100); and
- determining seriousnesses of the emergent risks (50) by combining the seriousnesses (40) of the operating risks (1, 2, 3, 4, 5, 6) of the subsystems (A, B, C).

6. Method according to Claims 4 and 5, further comprising:
- computing risk priority numbers of the emergent risks (50) by using the probabilities of occurrence (20) and the seriousnesses (40) of the emergent risks (50).

7. Method according to Claim 6, further comprising:
- selecting relevant emergent risks by comparing the probabilities of occurrence of the emergent risks (50) with a predefined threshold value for the probability of occurrence and the risk priority number of the emergent risks (50) with a predefined threshold value for the risk priority number.

8. Apparatus (400), designed to perform an analysis of the dependability of a technical system (100), wherein the apparatus (400) comprises a computing unit (410), a storage unit (420), an interface unit (430) and a database (440), wherein the storage unit (420) stores instructions that can be executed by the computing unit (410), and wherein the apparatus (400) is designed to perform the method according to Claim 1 when the instructions are executed in the computing unit (410).

9. Apparatus according to Claim 8, designed to perform one of the methods according to Claims 2-7.

10. Computer program comprising instructions that, when the computer program is executed by a computer, cause said computer to perform the steps of any method according to one of Claims 1-7.

11. Electronically readable data carrier comprising instructions that, when executed by a computer, cause said computer to perform the steps of any method according to one of Claims 1-7.

## Revendications

1. Procédé implémenté sur ordinateur destiné à la détermination de la sûreté d'exploitation d'un système technique (100), comprenant les étapes suivantes :
- réception d'une configuration (40) d'un système technique (100) comprenant plusieurs systèmes partiaux (A, B, C), dans lequel la configuration (40) définit un montage du système technique (100) à partir des systèmes partiaux (A, B, C) techniques ;
- réception de risques d'exploitation (1, 2, 3, 4, 5, 6) des systèmes partiaux (A, B, C), dans lequel chaque risque d'exploitation (1, 2, 3, 4, 5, 6) est attribué à un système partiel (A, B, C) ; **caractérisé par** l'étape
- de détermination d'une pluralité de risques émergents (50) pour la configuration du système technique (100), par formation de combinaisons de risques d'exploitation (1, 2, 3, 4, 5, 6) des différents systèmes partiaux (A, B, C), dans lequel une combinaison de risques d'exploitation (1, 2, 3, 4, 5, 6) comprend une survenue simultanée d'au moins deux risques d'exploitation (1, 2, 3, 4, 5, 6) de deux systèmes partiaux (A, B, C) différents du système technique (100), et dans lequel un risque émergent (50) représente une mise en danger de la santé d'une personne (P) par le système technique (100), laquelle est produite par une action simultanée d'au moins deux risques d'exploitation (1, 2, 3, 4, 5, 6) de deux systèmes partiaux (A, B, C) différents du système technique (100) sur la personne (P), dans lequel les risques émergents définis sont immédiatement renvoyés dans le procédé de conception par le fait que des mesures de protection supplémentaires sont installées dans l'installation.

2. Procédé selon la revendication 1, comprenant en outre :
- la détermination d'une mesure qui réduit au moins un des risques émergents ;
dans lequel la détermination d'une mesure comprend une application de fonctions entraînées sur les risques émergents, dans lequel les fonctions entraînées ont été entraînées avec des risques connus et des mesures connues correspondantes qui réduisent les risques connus.

3. Procédé selon l'une des revendications précédentes, dans lequel la détermination d'une pluralité de risques émergents (50) comprend une détermination automatique de toutes les combinaisons possibles des différents risques d'exploitation (1, 2, 3, 4, 5, 6) des systèmes partiaux (A, B, C).

4. Procédé selon l'une des revendications précédentes, comprenant en outre :
- la détermination de probabilités de survenue (20) pour les risques d'exploitation (1, 2, 3, 4, 5, 6) en prenant en compte des causes mécaniques (21) d'une survenue dans le système partiel (A, B, C) respectif ; et
- la détermination de probabilités de survenue des risques émergents (50) par la combinaison de probabilités de survenue (20) des risques d'exploitation (1, 2, 3, 4, 5, 6).

5. Procédé selon l'une des revendications précédentes, comprenant en outre :
- la détermination de gravités (40) des risques d'exploitation (1, 2, 3, 4, 5, 6) des systèmes partiaux (A, B, C) en tenant compte de la configuration (40) du système technique (100) ; et
- la détermination de gravités des risques émergents (50) par combinaison des gravités (40) des risques d'exploitation (1, 2, 3, 4, 5, 6) des systèmes partiaux (A, B, C).

6. Procédé selon la revendication 4 et 5, comprenant en outre :
- le calcul de nombres de priorités de risque des risques émergents (50) en employant les probabilités de survenue (20) et les gravités (40) des risques émergents (50).

7. Procédé selon la revendication 6, comprenant en outre :
- la sélection de risques émergents pertinents, par comparaison des probabilités de survenue des risques émergents (50) à une valeur seuil prédéfinie pour la probabilité de survenue, et du nombre de priorités de risques des risques émergents (50) à une valeur seuil prédéfinie pour le nombre de priorités de risque.

8. Dispositif (400) qui est conçu pour exécuter une détermination de la sûreté d'exploitation d'un système technique (100), dans lequel le dispositif (400) comprend une unité de calcul (410), une unité de mémoire (420), une unité d'interface (430) et une base de données (440), dans lequel l'unité de mémoire (420) conserve en mémoire des commandes pouvant être exécutées par l'unité de calcul (410), et dans lequel le dispositif (400) est conçu pour exécuter le procédé selon la revendication 1 dans l'exécution des commandes dans l'unité de calcul (410).

9. Dispositif selon la revendication 8, lequel est conçu pour exécuter un des procédés selon les revendications 2 - 7.

10. Programme informatique comprenant des commandes qui, lors de l'exécution du programme informatique par un ordinateur font que celui-ci exécute les étapes d'un procédé au choix selon l'une des revendications 1 - 7.

11. Support de données pouvant être lu électroniquement, comprenant des commandes qui, lors de l'exécution par un ordinateur, font que celui-ci exécute les étapes d'un procédé au choix selon l'une des revendications 1 - 7.
